# DEMANDE DE BREVET EUROPEEN

(11) **EP 2 168 804 A1**
(43) Date de publication de la demande: **31.03.2010**
(21) Numéro de dépôt: 09166031.6
(22) Date de dépôt: 21.07.2009
(51) Int. Cl.: B60K 15/05

(54) **Système pour monter avec précision une trappe a carburant dans une ouverture réalisée dans la tole de la caisse d'un véhicule automobile**

(30) Priorité: 29.09.2008 FR 0856532
(71) Demandeur: PEUGEOT CITROËN AUTOMOBILES S.A., 78140 Vélizy Villacoublay (FR)
(72) Inventeur: Laigle, David, 92370 Chaville (FR); Laviolette, Julien, 78330 Fontenay-le-Leury (FR)
(74) Mandataire: Allain, Laurent

(57) **Abrégé**

Système pour monter avec précision une trappe à carburant (12) dans une ouverture (15) réalisée dans la tôle de la caisse d'un véhicule automobile, dans lequel la trappe à carburant (12) comporte des moyens d'indexation coopérant avec des moyens d'indexation complémentaires prévus sur la périphérie de ladite ouverture (15) pour obtenir un positionnement précis de la trappe à carburant (12) dans ladite ouverture (15), **caractérisé en ce que** la trappe à carburant (12) porte sur sa périphérie deux pions d'indexation (13, 14) espacés et la périphérie de l'ouverture (15) comporte une ou plusieurs surfaces embouties (16) s'étendant autour de cette ouverture (15) qui est ou sont raccordées au bord de l'ouverture (15) par un épaulement (17) pour constituer un appui pour la périphérie de la trappe (12), cette surface (16) ou ces surfaces comportant deux trous espacés (18, 19) adaptés pour recevoir chacun l'un des deux pions (13, 14) d'indexation de la trappe à carburant, ces trous (18, 19) étant réalisés lors de l'emboutissage.

## Description

La présente invention concerne un système pour monter avec précision une trappe à carburant dans une ouverture réalisée dans la tôle de la caisse d'un véhicule automobile.

La figure 1 montre en perspective une trappe à carburant 1 de forme et structure connues prête à être montée dans une ouverture 2 emboutie dans la tôle 3 de la caisse d'un véhicule automobile.

Cette ouverture 2 est généralement située sur le côté du véhicule.

La trappe à carburant 1 porte sur l'un de ses côtés un couvercle articulé 4.

La figure 2 est une vue en perspective de la trappe à carburant 1 montrant l'arrière de celle-ci.

La figure 3 est une vue extérieure montrant la trappe à carburant 1 montée dans l'ouverture 2.

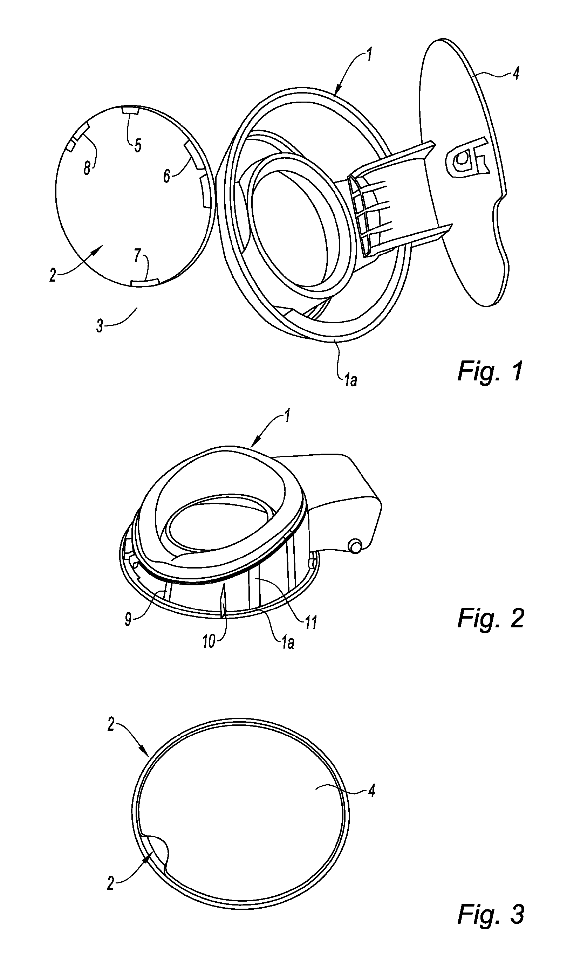

Le problème technique à résoudre est de pouvoir monter ou positionner avec précision la trappe à carburant 1 dans l'ouverture 2 tout en respectant les exigences en matière de jeux et d'affleurements pour obtenir un montage de qualité, comme montré sur la figure 3.

Dans l'exemple représenté sur la figure 1 l'ouverture 2 est circulaire.

Le bord extérieur 1a de la trappe 1 est également un cercle dont le diamètre correspond sensiblement à celui de l'ouverture 2.

L'ouverture 2 est pourvue sur son pourtour de moyens d'indexation sous forme de saillies 5, 6, 7, 8 réalisées lors de l'emboutissage destinées à servir d'appuis pour la trappe 1.

Ces saillies coopèrent avec des moyens d'indexation complémentaires 9, 10, 11 (voir figure 2) moulés sur la paroi latérale de la trappe 1.

La correspondance entre ces moyens d'indexation permet en principe de positionner avec précision la trappe 1 dans l'ouverture 2.

La fixation définitive de la trappe 1 est réalisée par des moyens d'encliquetage.

Cependant, les tolérances de fabrication sont telles que la précision de la position des saillies 5, 6, 7, 8 réalisées sur la périphérie de l'ouverture 2 est de plus ou moins 0,5 millimètre, alors que les exigences d'affleurement entre l'ouverture 2 et la trappe 1 sont de moins 0,5 millimètre à plus ou moins 0,7 millimètre.

Ainsi 75 pourcent de la tolérance est prise au stade de l'emboutissage de la tôle présentant l'ouverture 2.

De ce fait, il subsiste une marge d'erreur très réduite (seulement 25 pourcent) dans la fabrication de la trappe à carburant 1.

Par ailleurs, la mise au point du positionnement de la trappe 1 dans l'ouverture 2 est rendue délicate du fait que l'isostatisme est effectué sur des saillies d'appui de faible surface.

En outre, s'il est nécessaire de démonter la trappe 1, celle-ci devra ensuite être remplacée car les moyens d'indexation 9, 10, 11 s'érodent lors de cette opération.

De plus, les moyens décrits plus haut pour obtenir l'isostatisme du montage sont complexes et rendent le montage difficile, de sorte que les tolérances des jeux et affleurements ne sont pas maîtrisés.

Divers systèmes de fixation de clapet anti-refoulement et de trappe à carburant sont décrits dans les documents EP 1 672 258 et FR 2 895 942.

Cependant, ces documents n'évoquent pas le problème qui est à la base de la présente invention tel qu'évoqué plus haut et qui concerne non pas la fixation, mais le positionnement précis de la trappe à carburant.

Le but de la présente invention est de remédier aux inconvénients de la solution décrite plus haut en référence aux figures 1 à 3.

Ce but est atteint selon l'invention, grâce à un système pour monter avec précision une trappe à carburant dans une ouverture réalisée dans la tôle de la caisse d'un véhicule automobile, dans lequel la trappe à carburant comporte des moyens d'indexation coopérant avec des moyens d'indexation complémentaires prévus sur la périphérie de ladite ouverture pour obtenir un positionnement précis de la trappe à carburant dans ladite ouverture, caractérisé en ce que la trappe à carburant porte sur sa périphérie deux pions d'indexation espacés et la périphérie de l'ouverture comporte une ou plusieurs surfaces embouties s'étendant autour de cette ouverture qui est ou sont raccordées au bord de l'ouverture par un épaulement pour constituer un appui pour la périphérie de la trappe, cette surface ou ces surfaces comportant deux trous espacés adaptés pour recevoir chacun l'un des deux pions d'indexation de la trappe à carburant, ces trous étant réalisés lors de l'emboutissage.

L'engagement des deux pions d'indexation de la trappe à carburant dans les deux trous formés sur la ou les surfaces d'appui embouties de l'ouverture, permet d'obtenir d'une manière simple, un positionnement précis de la trappe dans cette ouverture.

De plus, ce système se démonte facilement.

Il suffit de dégager les pions d'indexation des deux trous, ce qui peut être effectué par une simple translation qui peut être réalisée sans friction et sans risque de détériorer la ou les surfaces d'appui de l'ouverture et les pions de la trappe.

De préférence, ladite surface emboutie s'étend de façon continue autour de ladite ouverture.

Une telle surface peut être réalisée facilement et avec précision lors de l'emboutissage.

Ainsi, l'appui de la périphérie de la trappe sur cette surface emboutie garantit une position précise de la trappe dans l'ouverture, selon une première direction, le positionnement des pions d'indexation dans les deux trous formés dans la surface ci-dessus garantissant une position précise dans les autres directions.

De préférence également, l'un des trous est circulaire et a un diamètre sensiblement égal à l'un des pions d'indexation et l'autre trou est oblong, sa largeur étant sensiblement égale au diamètre de l'autre pion.

Ce trou oblong permet de tenir compte des tolérances de fabrication en ce qui concerne la position des trous et des pions d'indexation.

Dans un mode de réalisation, l'ouverture et la trappe à carburant ont une forme rectangulaire, les deux trous et les deux pions d'indexation étant alignés dans une direction parallèle à l'un des côtés du rectangle, le trou oblong étant allongé dans cette direction.

Selon ce mode de réalisation, les deux trous peuvent être situés chacun près d'un coin de l'ouverture sur une partie élargie de ladite surface d'appui de l'ouverture.

Dans un mode de réalisation avantageux de l'invention, la périphérie de la trappe comporte une surface adaptée pour s'appuyer sur la ou lesdites surfaces d'appui de l'ouverture, cette surface de la trappe étant limitée extérieurement par le bord extérieur de la trappe et intérieurement par un épaulement et lorsque ladite surface de la trappe est en appui sur la ou les surfaces d'appui de l'ouverture, ledit bord extérieur de la trappe s'ajuste avec un faible jeu dans l'épaulement formé autour de l'ouverture et l'épaulement limitant intérieurement ladite surface de la trappe s'ajuste avec un faible jeu dans l'évidement défini par le bord intérieur de la surface d'appui de l'ouverture.

La trappe à carburant peut de façon connue comporter un couvercle articulé.

Dans ce cas, de préférence, lorsque ladite surface de la trappe est en appui sur ladite surface d'appui de l'ouverture et lorsque le couvercle est fermé, la surface extérieure de ce dernier affleure la surface extérieure de la tôle autour de ladite ouverture.

De préférence également, la périphérie de la trappe à carburant comporte des doigts de fixation coopérant par encliquetage avec le bord intérieur de la surface d'appui de l'ouverture, deux de ces doigts de fixation étant disposés entre les deux pions d'indexation.

Ainsi, lorsque les deux pions sont engagés dans les trous correspondants, il suffit de pousser sur la trappe pour que les deux doigts de fixation s'encliquètent sur le bord de la surface d'appui de l'ouverture.

La trappe à carburant peut être moulée d'une seule pièce en matière plastique à l'exception de son couvercle.

Selon un autre aspect, l'invention concerne un véhicule automobile comportant sur l'un de ses côtés latéraux une ouverture emboutie dans la tôle de la caisse prévue pour une trappe à carburant, caractérisé en ce que cette trappe est montée dans ladite ouverture au moyen d'un système selon l'invention.

D'autres particularités et avantages de l'invention apparaîtront encore tout au long de la description ci-après.

Aux dessins annexés, donnés à titre d'exemples, non limitatifs :

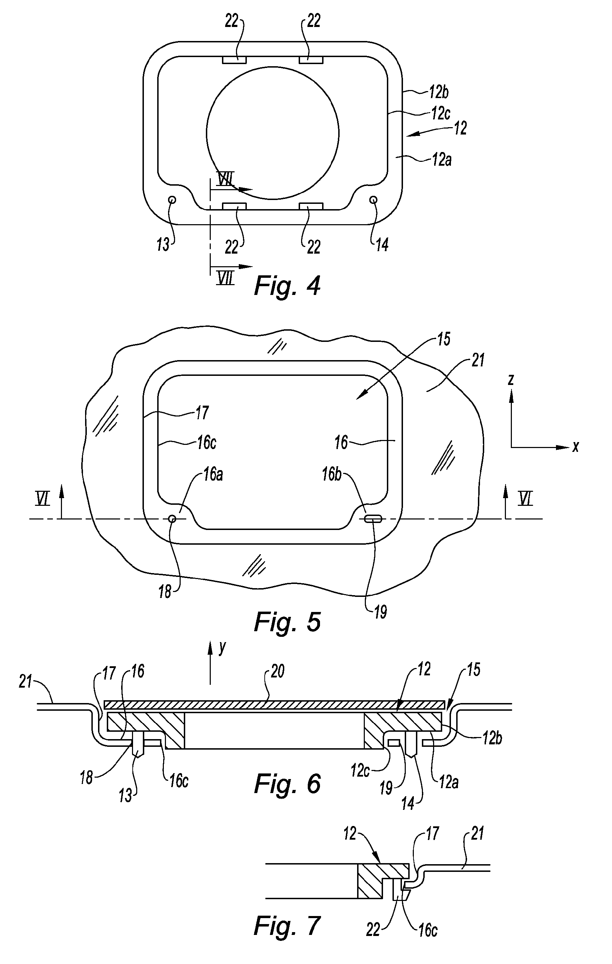

- la figure 4 est une vue en plan montrant la face arrière d'une trappe à carburant selon l'invention,
- la figure 5 est une vue en plan montrant l'ouverture réalisée dans la tôle pour recevoir la trappe de la figure 4,
- la figure 6 est une vue en coupe suivant le plan VI-VI de la figure 5, montrant la trappe en position montée dans l'ouverture,
- la figure 7 est une vue en coupe suivant le plan VII-VII de la figure 4, montrant la fixation par encliquetage de la trappe dans l'ouverture.

Les figures 4 à 6 montrent que la face arrière de la trappe à carburant 12 porte sur sa périphérie 12a deux pions d'indexation espacés 13, 14 et la périphérie de l'ouverture 15 comporte une surface emboutie 16 s'étendant autour de cette ouverture 15 qui est raccordée au bord de l'ouverture 15 par un épaulement 17.

La surface emboutie 16 constitue un appui pour la périphérie 12a de la trappe 12, comme montré par la figure 6.

La surface emboutie 16 de l'ouverture 15 comporte (voir figure 5) deux trous espacés 18, 19 adaptés pour recevoir chacun l'un des deux pions d'indexation 13, 14 de la trappe à carburant 12, comme montré sur la figure 6.

Dans l'exemple représenté sur les figures 1 à 6, la surface emboutie 16 s'étend de façon continue autour de l'ouverture 15.

Dans une variante de réalisation, cette surface emboutie pourrait être constituée par plusieurs surfaces embouties réparties tout autour de l'ouverture 15.

On voit sur la figure 5 que l'un 18 des trous est circulaire et a un diamètre sensiblement égal à l'un 13 des pions d'indexation et l'autre trou 19 est oblong, sa largeur étant sensiblement égale au diamètre de l'autre pion 14.

Dans l'exemple représenté, l'ouverture 15 et la trappe à carburant 12 ont une forme rectangulaire et les deux trous 18, 19 ainsi que les deux pions d'indexation 13, 14 sont alignés dans une direction parallèle à l'un des côtés du rectangle, le trou oblong 19 étant allongé dans cette direction.

Dans l'exemple montré sur la figure 5, le trou oblong 19 est allongé dans la direction longitudinale X du véhicule.

De plus, les deux trous 18, 19 sont situés chacun près d'un coin de l'ouverture 15 sur une partie élargie 16a, 16b de la surface d'appui 16 de l'ouverture 15.

Comme montré par les figures 4 et 6, la périphérie de la trappe 12 comporte une surface 12a adaptée pour s'appuyer sur la surface d'appui emboutie 16 de l'ouverture 15.

Cette surface 12a de la trappe 12 est limitée extérieurement par le bord extérieur 12b de la trappe et intérieurement par un épaulement 12c.

La figure 6 montre que lorsque la surface 12a de la trappe 12 est en appui sur la surface emboutie d'appui 16 de l'ouverture 15, le bord extérieur 12b de la trappe 12 s'ajuste avec un faible jeu dans l'épaulement 17 formé autour de l'ouverture 15 et l'épaulement 12c limitant intérieurement la surface 12a de la trappe 12 s'ajuste avec un faible jeu dans l'évidement défini par le bord intérieur 16c de la surface d'appui 16 de l'ouverture 15.

Lorsque la surface 12a de la trappe 12 est en appui sur la surface d'appui 16 de l'ouverture 15 et lorsque le couvercle 20 de la trappe est fermé (voir figure 6), la surface extérieure de ce dernier affleure la surface extérieure de la tôle 21 autour de l'ouverture 15.

La figure 4 montre, par ailleurs, que la périphérie 12a de la trappe à carburant 12 comporte des doigts de fixation 22 coopérant par encliquetage (voir figure 7) avec le bord intérieur 16c de la surface d'appui emboutie 16 de l'ouverture 15.

Deux de ces doigts de fixation 22 sont disposés entre les deux pions d'indexation 13, 14.

La trappe à carburant 12 peut être moulée d'une seule pièce en matière plastique, y compris les pions d'indexation 13, 14 et les doigts de fixation 22.

Pour monter la trappe à carburant 12 dans l'ouverture 15, il suffit de présenter la face arrière de la trappe en regard de l'ouverture et d'engager les deux pions en saillie 13, 14 dans les trous 18, 19 réalisés sur la surface emboutie 16 qui borde intérieurement la périphérie du trou 15.

Le fait que l'un 19 des trous soit oblong permet de tenir compte des tolérances de fabrication.

En fin de course d'engagement des pions 13, 14 dans les trous 18, 19 le bec d'encliquetage des doigts 22 s'accroche (voir figure 7) sous le bord intérieur 16c de la surface emboutie 16, ce qui permet de fixer définitivement la trappe 12 dans l'ouverture 15 réalisée dans la tôle 21.

Dans cette position, la trappe 12 est fixée avec précision dans l'ouverture, en respectant les exigences en matière de jeux et d'affleurements.

Les principaux avantages du système de fixation que l'on vient de décrire sont les suivants.

La position des trous d'indexation 18, 19 est définie avec une grande précision car ceux-ci sont réalisés lors de l'emboutissage en même temps que l'ouverture 15 et la surface d'appui 16.

Cette précision est égale à plus ou moins 0,05 millimètre au lieu de plus ou moins 0,5 millimètre dans le cas de la solution connue représentée sur les figures 1 à 3.

Cette précision représente seulement 10 pourcent (au lieu de 75 pourcent dans la solution connue) de la fourchette de tolérance finale souhaitée qui est de plus ou moins 0,5 millimètre.

Le système selon l'invention permet donc de garantir l'obtention d'un montage de qualité esthétique respectant les exigences en matière de jeux et d'affleurement.

Par ailleurs, lors du démontage de la trappe à carburant, on ne risque pas d'user les pions 13, 14 car leur dégagement des trous 18, 19 s'effectue par translation selon la direction Y (voir figure 6) sensiblement sans friction.

De plus, le système selon l'invention présente les avantages d'être beaucoup plus simple et de faciliter le montage de la trappe par rapport à la solution connue.

## Revendications

1. Système de montage d'une trappe à carburant (12) dans une ouverture (15) réalisée dans la tôle de la caisse d'un véhicule automobile, dans lequel la trappe à carburant (12) comporte des moyens d'indexation coopérant avec des moyens d'indexation complémentaires prévus sur la périphérie de ladite ouverture (15) pour obtenir un positionnement précis de la trappe à carburant (12) dans ladite ouverture (15), la trappe à carburant (12) portant sur sa périphérie deux pions d'indexation (13, 14) espacés et la périphérie de l'ouverture (15) comportant une ou plusieurs surfaces embouties (16) s'étendant autour de cette ouverture (15) qui est ou sont raccordées au bord de l'ouverture (15) par un épaulement (17) pour constituer un appui pour la périphérie de la trappe (12), cette surface (16) ou ces surfaces comportant deux trous espacés (18, 19) adaptés pour recevoir chacun l'un des deux pions (13, 14) d'indexation de la trappe à carburant, ces trous (18, 19) étant réalisés lors de l'emboutissage, **caractérisé en ce que** l'un (18) des trous est circulaire et a un diamètre sensiblement égal à l'un (13) des pions d'indexation et l'autre trou (19) est oblong, sa largeur étant sensiblement égale au diamètre de l'autre pion (14).

2. Système selon la revendication 1, **caractérisé en ce que** ladite surface emboutie (16) s'étend de façon continue autour de ladite ouverture (15).

3. Système selon la revendication 1, **caractérisé en ce que** l'ouverture (15) et la trappe à carburant (12) ont une forme rectangulaire, les deux trous (18, 19) et les deux pions d'indexation (13, 14) étant alignés dans une direction parallèle à l'un des côtés du rectangle, le trou oblong (19) étant allongé dans cette direction.

4. Système selon la revendication 3, **caractérisé en ce que** les deux trous (18, 19) sont situés chacun près d'un coin de l'ouverture (15) sur une partie élargie (16a, 16b) de ladite surface d'appui (16) de l'ouverture (15).

5. Système selon l'une des revendications 1 à 4, **caractérisé en ce que** la périphérie de la trappe (12) comporte une surface (12a) adaptée pour s'appuyer sur la ou lesdites surfaces d'appui (16) de l'ouverture (15), cette surface (12a) de la trappe (12) étant limitée extérieurement par le bord extérieur (12b) de la trappe et intérieurement par un épaulement (12c) et **en ce que** lorsque ladite surface (12a) de la trappe est en appui sur la ou les surfaces d'appui (16) de l'ouverture (15), ledit bord extérieur (12b) de la trappe (12) s'ajuste avec un faible jeu dans l'épaulement (17) formé autour de l'ouverture (15) et l'épaulement (12c) limitant intérieurement ladite surface (12a) de la trappe (12) s'ajuste avec un faible jeu dans l'évidement défini par le bord intérieur (16c) de la surface d'appui (16) de l'ouverture (15).

6. Système selon la revendication 5, la trappe à carburant (12) comportant un couvercle articulé (20), **caractérisé en ce que** lorsque ladite surface (12a) de la trappe (12) est en appui sur ladite surface d'appui (16) de l'ouverture (15) et lorsque le couvercle (20) est fermé, la surface extérieure de ce dernier affleure la surface extérieure de la tôle (21) autour de ladite ouverture (15).

7. Système selon l'une des revendications 2 à 6, **caractérisé en ce que** la périphérie de la trappe à carburant (12) comporte des doigts de fixation (22) coopérant par encliquetage avec le bord intérieur (16c) de la surface d'appui (16) de l'ouverture (15), deux de ces doigts de fixation (22) étant disposés entre les deux pions d'indexation (13, 14).

8. Système selon l'une des revendications 1 à 7, **caractérisé en ce que** la trappe à carburant (12) est moulée d'une seule pièce en matière plastique, à l'exception de son couvercle.

9. Véhicule automobile comportant sur l'un de ses côtés latéraux une ouverture (15) emboutie dans la tôle (21) de la caisse prévue pour une trappe à carburant (12), **caractérisé en ce que** cette trappe (12) est montée dans ladite ouverture (15) au moyen d'un système selon l'une des revendications 1 à 8.
